# EUROPÄISCHE PATENTSCHRIFT

(11) **EP 1 050 747 B1**
(45) Veröffentlichungstag und Bekanntmachung des Hinweises auf die Patenterteilung: **20.10.2010**
(21) Anmeldenummer: 00109064.6
(22) Anmeldetag: 26.04.2000
(51) Int. Cl.: G01F 15/04, G01F 25/00

(54) **Anordnung zum Bestimmen eines Volumens eines Gasstroms**
Device for determining a volume of a gas stream
Dispositif pour déterminer un volume d'un courant de gaz

(30) Priorität: 04.05.1999 DE 19920393
(43) Veröffentlichungstag der Anmeldung: 08.11.2000
(73) Patentinhaber: Elster GmbH, 55252 Mainz-Kastel (DE)
(72) Erfinder: Ewerlin, Ulrich, 44791 Bochum (DE); Kettner, Thomas, 65623 Netzbach (DE)
(74) Vertreter: Harlacher, Mechthild

(56) Entgegenhaltungen:
- EP-A- 0 074 164
- EP-A- 0 205 779
- EP-A- 0 519 961
- DE-A- 2 848 985
- US-A- 4 390 956
- US-A- 4 463 613
- US-A- 5 706 273

## Beschreibung

Die Erfindung betrifft eine Anordnung zum Bestimmen eines auf Normbedingungen bezogenen Volumens eines Gasstroms entsprechend dem Oberbegriff des Anspruches 1.

Aus der US- A-4,390,956 ist derartige Anordnung bekannt, die einen Gaszähler mit einem mechanisches Zählwerk aufweist, der einen Zählerstand anzeigt, welcher den unkorrigierten Volumenstrom darstellt. Ein zweites elektronisches bzw. elektromechanisches Zählwerk erzeugt elektrische Messsignale, die in eine Verarbeitungseinrichtung eines Mengenumwerters übertragen werden und in dieser auf der Grundlage der gemessenen Temperatur und des gemessenen Druckes zu Signalen verarbeitet werden, die einen gespeicherten Zählerstand des zweiter Zählwerks erhöhen. Nachteilig bei dieser Anordnung ist, dass der Zählerstand des zweiten elektronischen Zählwerks aufgrund von Fehlern in der Impulsübertragung nicht exakt dem Zählerstand des mechanischen Zählers entspricht, so dass Fehlerkorrekturen erforderlich sind.

Eine Anordnung der eingangs genannten Art ist ferner aus der DIN 33800 vom Juli 1986 bekannt. Diese Norm beschreibt die Anforderungen an Turbinenradgaszähler, die neben einem mechanischen Rollenzählwerk Anschlussstellen für Temperaturaufnehmer und Druckmessanschlüsse aufweisen, wobei diese mit einem Zustands-Mengenumwerter gekoppelt werden. Letzterer ist in der Norm lediglich erwähnt. Ferner sind Zählwerke mit integrierten Impulsgebern erwähnt. Dabei handelt es sich um elektrische Näherungsschalter, die vorzugsweise der DIN 19234 entsprechen. Bei einem Turbinengaszähler beispielsweise liefern diese elektrischen Näherungsschalter oder Wegaufnehmer ein Ausgangssignal mit einer Impulsfolge, wobei die Impulsfrequenz proportional zur Umdrehungsfrequenz eines vom Turbinenrad des Turbinenradgaszählers angetriebenen rotierenden Bauelements des Zählwerks ist. Dieses Bauelement befindet sich entweder vor oder hinter einer Justierstufe des Turbinenradgaszählers. Die Impulsfrequenz des ausgegebenen Signals ist somit proportional zur Umdrehungszahl des Turbinenrades, welche wiederum proportional zum Volumenstrom des Gases ist. Das Impulssignal wird an den Mengenumwerter weitergeleitet, der durch Zählen der Impulse einen dem Volumen entsprechenden Wert bestimmen kann. Durch Einbeziehung der vom Druck- und vom Temperatursensor erfassten Messwerte kann der Mengenumwerter einen dem auf Normbedingung bezogenen Volumen entsprechenden Wert bestimmen. Sofern dem Mengenumwerter ein Anfangszählerstand zu einem vorgegebenen Zeitpunkt bekannt ist (beispielsweise eingegeben wird), kann der Mengenumwerter mit Hilfe des aus den Impulsen gewonnenen Wertes, der dem seit diesem Zeitpunkt durchströmten Volumen entspricht, einen errechneten Wert für den aktuellen Zählerfortschritt ("nachgebildeten Zählerstand") reproduzieren.

Nachteilig bei dieser Anordnung ist beispielsweise, daß dieser nachgebildete Zählerstand aufgrund von Fehlern bei der Impulsübertragung oder Fehlern bei der Bestimmung des Volumens nicht exakt dem tatsächlichen Zählerfortschritt des mechanischen Zählwerks entspricht. Deshalb ist es regelmäßig erforderlich, den Stand des mechanischen Zählwerks vor Ort abzulesen und den Mengenumwerter entsprechend zu korrigieren.

Aufgabe der Erfindung ist es daher, bei der Bestimmung eines auf Normbedingungen bezogenen Volumens eines Gasstroms der eingangs genannten Art die Fehlerquellen der Fernerfassung zu verringern.

Diese Aufgabe wird erfindungsgemäß durch eine Anordnung mit den Merkmalen des Patentanspruchs 1 gelöst. Sie wird somit bei einer Anordnung der eingangs genannten Art dadurch gelöst, dass die Zählersensoranordnung den absoluten Zählerstand des mechanischen Zählwerks erfasst, dass das mechanische Zählwerk eine Auswerteschaltung aufweist, die das elektrische Messsignal der Zählersensoranordnung verarbeitet und periodisch wiederholt ein den absoluten Zählerstand darstellendes Codesignal auf eine mit dem Mengenumwerter gekoppelte Übertragungsleitung ausgibt und dass die Auswerteschaltung als Codesignal ein binäres Signal mit zwei Pegelwerten unterschiedlicher logischer Bedeutung erzeugt, wobei ein erster Pegelwert durch einen Stromwert zwischen 2,1mA und 3,9mA und ein zweiter Pegelwert durch einen Stromwert unter 1,2mA repräsentiert ist.

Diese Anordnung ermöglicht insbesondere ein Fernablesen des Zählerstandes bei verringerten Fehlereinflüssen und reduziert die Notwendigkeit des wiederholten direkten Ablesens des Zählwerks "vor Ort". Dies verringert die Betriebskosten. Ferner haben die gewählten Pegelwerte den Vorteil, dass bei der Eingangsschnittstelle der vorhandenen Mengenumwerter keine Hardwareänderungen erforderlich sind.

Das mechanische Zählerwerk ist vorzugsweise ein mehrstelliges Rollenzählwerk, wobei die Genauigkeit der Erfassung des Zählerstandes beispielsweise gleich der Auflösung der geringstwertigen Zählerrolle ist. Die Zählersensoranordnung kann aber darüber hinaus auch mehr als zehn Schritte pro Umdrehung der geringstwertigen Zählerrolle erfassen. Als Auswerteschaltung wird eine aktive Schaltung verwendet, die einen Prozessor enthält. Eine solche Auswerteschaltung erfasst die Ausgangssignale der einzelnen Erfassungssensoren der Zählersensoranordnung und erzeugt programmgesteuert aus diesen Signalen ein wiederholt ausgesendetes Ausgabesignal, welches seriell (unter anderem) den jeweiligen Zählerstand codiert. Eine solche mit den Sensoren verbundene Auswerteschaltung wird auch als Encoder bezeichnet.

Vorzugsweise ist der erste Pegelwert durch einen Stromwert zwischen 2,2mA und 3,9mA und der zweite Pegelwert durch einen Stromwert unter 1,0mA repräsentiert. Diese Pegel entsprechen den mit bisher angewendeten Näherungsschaltern oder elektrischen Wegaufnehmern gemäß DIN 19234 erzeugten Pegeln. Diese Pegel haben den Vorteil, dass bei der Eingangsschnittstelle der vorhandenen Mengenumwerter keine.Hardwareänderungen erforderlich sind.

Bei einer bevorzugten Weiterbildung der erfindungsgemäßen Anordnung erzeugt die Auswerteschaltung neben dem den Zählerstand darstellenden Codesignal ein eine Maßeinheit codierendes digitales Signal und ein Fehlerprüfsignal, wobei sie diese Signale enthaltende Codesignal-Blöcke periodisch wiederholt ausgibt. Das die Maßeinheit codierende digitale Signal codiert eine Volumenmenge, die einem Digit der geringstwertigen Zählerrolle entspricht. Als Fehlerprüfsignal wird beispielsweise ein die Parität anzeigendes Prüfzeichen oder ein anderer Fehlererfassungs- oder Fehlerkorrekturcode verwendet. Darüber hinaus kann das Fehlerprüfsignal auch Signale umfassen, die die korrekte Funktion der Zählersensoranordnung und/oder der Auswerteschaltung anzeigen bzw. die umgekehrt beispielsweise den Ausfall eines Sensors oder den Ausfall der Stromversorgung anzeigen.

Bei einer Ausführungsform der erfindungsgemäßen Anordnung ist das mechanische Zählwerk mit Zählersensoranordnung und Auswerteschaltung als Zusatzgerät ausgebildet, das auf einer Ausgangswelle des Gaszählers aufsetzbar ist. Dies gestattet die Nachrüstung vorhandener Zähler, die einen mechanischen Abtrieb (Ausgangswelle) aufweisen. Derartige Zusatzgeräte können beispielsweise auf den mechanischen Abtrieb von Turbinenradgaszählern oder Drehkolbengaszählern aufgesetzt werden, wonach der Aufsatz durch einen Sicherungsstempel gegen ein Entfernen oder andere Manipulationen gesichert wird. Zusätzlich wird dann, wenn der Zusatzgeräteaufsatz als Hauptzählwerk betrieben wird, das im ursprünglichen Zähler vorhandene Zählwerk unkenntlich gemacht, beispielsweise durch Abdecken des Sichtfensters oder durch Entfernen der Zählwerksrollen.

Bei einer anderen Ausführungsform, bei der der Gaszähler ein Turbinenradgaszähler ist, wird das mechanische Zählwerk über eine Magnetkupplung mit einem in einem Gasraum von strömenden Gas angetriebenen Turbinenrad gekoppelt und in einem Gehäuse des Turbinenradgaszählers angeordnet, wobei die Zählersensoranordnung an das Zählwerk angreifende berührungslose Sensoren aufweist. Diese Anordnung wird bei neu installierten Zählern verwendet. Als berührungslose Sensoren werden beispielsweise optische oder andere auf ein elektromagnetisches oder magnetisches Feld ansprechende Sensoren mit eigener oder fremder Feldanregung verwendet. Dazu gehören u.a. Paare von optischen Strahlern und Empfängern, Permanentmagneten zugeordnete Hall-Sensoren oder Hochfrequenz- oder Gleichfeld-Annäherungsschalter. Wesentlich ist, daß die Zählersensoranordnung keine oder nur sehr geringere Kräfte auf das Zählwerk ausübt, damit keine Meßfehler durch Beeinflussung der Drehbewegung der Zählerbestandteile auftreten können.

Eine bevorzugte Anordnung dieser Art ist **dadurch gekennzeichnet, daß** die Zählersensoranordnung jeweils N Sensorelemente je Zahlenrolle des mechanischen Zählwerks aufweist, die so angeordnet sind, daß sie jeweils 2^{N}-2 im wesentlichen äquidistante Positionen je Umdrehung der Zahlenrolle erfassen können, wobei N > 4 ist. Binäre Sensorelemente sind solche Sensorelemente, die zwei unterscheidbare Zustände eines Ausgangssignals aufweisen. Mit N derartigen Sensorelementen wären somit 2^{N} verschiedene Ausgangszustände erzeugbar. Um die Störsicherheit zu erhöhen, werden zwei dieser Ausgangszustände (vorzugsweise die Ausgangszustände, in denen sich sämtliche Sensorausgänge in dem gleichen Zustand befinden) nicht ausgenutzt, so daß sich 2^{N}-2 auswertbare Ausgangszustände der Gesamtanordnung ergeben. Um mit einer solchen Anordnung wenigstens zehn äquidistante Positionen je Umdrehung einer Zahlenrolle erfassen zu können, wird N ≥ 4 gewählt. Vorzugsweise sind N = 5 optische Sensorelemente vorgesehen.

Bei einer bevorzugten Weiterbildung der erfindungsgemäßen Anordnung weist das mechanische Zählwerk zusätzlich einen das Voranschreiten des Zählwerks erfassenden Wegsensor auf, der an einer am Zählwerk von außen zugängliche Schnittstelle ein Ausgangssignal liefert, welches Impulse in einer zum vom Zählwerk erfaßten Volumenstrom des Gases proportionalen Frequenz enthält. Die zwischen dem Zählwerk und dem Mengenumwerter für die normale Erfassung vorgesehene Übertragungsstrecke ist in der Regel gegen einen unberechtigten Zugriff geschützt. Um dennoch eine Funktionsprüfung "vor Ort", d.h. unmittelbar am Zähler, zu ermöglichen, ist der zusätzliche Wegsensor mit der von außen frei zugänglichen Schnittstelle vorgesehen. Dieser integrierte Wegsensor (beispielsweise ein Näherungsschalter) ist vorzugsweise galvanisch von der Zählersensoranordnung und der Auswerteschaltung getrennt. Bei einer bevorzugten Weiterbildung dieser Ausführungsform umfaßt der Wegsensor wenigstens einen mit einer geringstwertigen Zahlenrolle des Zählwerks gekoppelten Dauermagneten und einen auf das so erzeugte veränderliche Magnetfeld ansprechenden Reed-Kontakt derart, daß bei jeder Umdrehung der geringstwertigen Zahlenrolle wenigstens ein Impuls des Ausgangssignals an der von außen zugänglichen Schnittstelle erzeugbar ist. Im einfachsten Fall sind die beiden Anschlüssen des Reed-Kontaktes mit zwei Stiften oder Buchsen eines von außen zugänglichen Steckkontaktes verbunden. Diese Anordnung des mit der geringstwertigen Zahlenrolle synchronen Wegsensors kann für Eichzwecke verwendet werden und gestattet den Einsatz einfacher Prüfgeräte, die keine Auswerteelektronik zur Verarbeitung eines den Zählerstand darstellenden Codesignals aufweisen. Die so gebildete Schnittstelle kann darüber hinaus für eine interne Überwachung und Verbrauchserfassung unabhängig von der Fernerfassung seitens des Mengenumwerters benutzt werden.

Bei einer bevorzugten Weiterbildung der erfindungsgemäßen Anordnung ist mit der Verarbeitungseinrichtung des Mengenumwerters eine Datenausgabeschnittstelleneinrichtung derart gekoppelt, daß diese wahlweise das das Volumen codierende Signal und/oder ein den Zählerstand darstellendes Signal ausgeben kann. Die Datenausgabeschnittstelle entspricht vorzugsweise einer Standardschnittstelle (sowohl bezüglich der verwendeten Pegel als auch bezüglich des verwendeten Protokolls). Diese Datenausgabeschnittstelle ist derart konfigurierbar, daß sie einerseits einen Wert ausgeben kann, der dem auf Normbedingungen bezogenen Volumen entspricht, welches unter Berücksichtigung von Druck und Temperatur von der Verarbeitungseinrichtung berechnet worden ist. Alternativ kann die Datenausgabeschnittstelle so konfiguriert werden, daß sie ein den Zählerstand direkt darstellendes Signal ausgibt. Auf diese Weise ist ein direktes Fernablesen des Zählerstandes möglich. Dies ersetzt die Begehung vor Ort bei Beibehaltung der vorhandenen Schnittstellenspezifikation. Die Konfiguration, d.h. die Auswahl des auszugebenden Signals erfolgt vorzugsweise in Abhängigkeit von einem Steuersignal, daß entweder direkt am Mengenumwerter eingestellt oder eingegeben wird oder das über die Datenausgabeschnittstelleneinrichtung eingebbar ist.

Vorteilhafte Weiterbildungen der Erfindung sind in den Unteransprüchen gekennzeichnet.

Im folgenden wird die Erfindung anhand eines in der Zeichnung dargestellten Ausführungsbeispiels näher beschrieben. In der Zeichnung zeigen:
Fig. 1 eine Prinzipdarstellung der erfindungsgemäßen Anordnung, und
Fig. 2A - 2C Ansichten eines als Zusatzgerät konfigurierten Zählwerks mit integriertem Encoder.

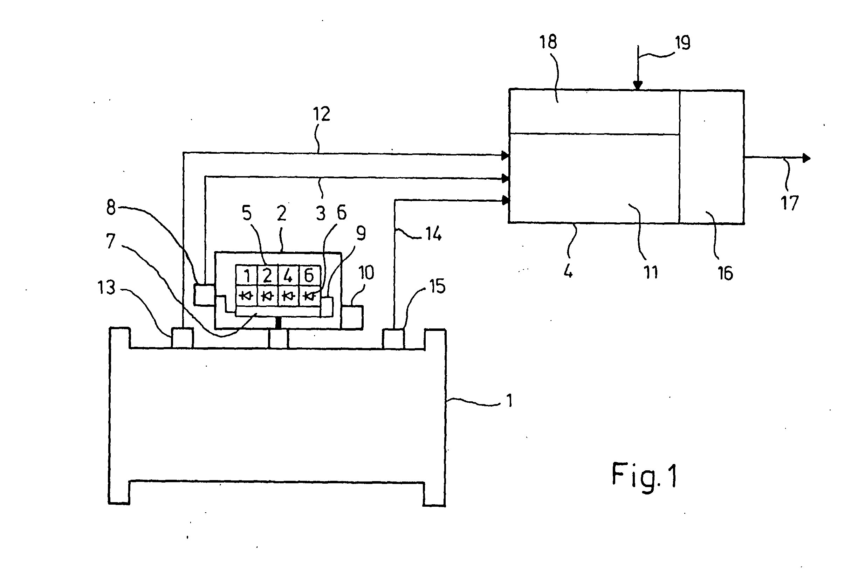

Fig. 1 zeigt eine Prinzipdarstellung eines Ausführungsbeispiels der erfindungsgemäßen Anordnung, die einen Turbinenradgaszähler 1 mit einem daran montierten Zählwerk 2 und einen über die Übertragungsleitung 3 mit dem Zählwerk gekoppelten elektronischen Mengenumwerter 4 aufweist. Das Zählwerk 2 enthält ein mechanisches Rollenzählwerk 5. Das mechanische Rollenzählwerk 5 ist vorzugsweise 8-stellig, wobei in der Prinzipskizze gemäß Fig. 1 nur 4 Stellen angedeutet sind. Das mechanische Rollenzählwerk 5 ist durch ein Sichtfenster im Gehäuse des Zählwerks 2 hindurch vor Ort ablesbar. Das mechanische Rollenzählwerk wird von einem Turbinenrad des Turbinenradzählers 1, mit dem es beispielsweise über eine Magnetkupplung gekoppelt ist, angetrieben. In diese mechanischen Übertragungsstrecke zwischen Turbinenrad und Rollenzählwerk ist eine Justierstufe eingekoppelt. Zusätzlich kann der mit dem Zählwerk 2 verbundene Turbinenrädzähler 1 eine (nicht gezeigte) Ausgangswelle aufweisen, die synchron mit dem Zählwerk angetrieben wird. Auf diese Ausgangswelle können Zusatzgeräte aufgesteckt werden.

In dem Gehäuse des Zählwerks 2 sind ferner eine Zählersensoranordnung 6 und eine Auswerteschaltung 7 angeordnet. Die Zählersensoranordnung ist mit dem mechanischen Zählwerk 5 derart gekoppelt, daß sie dessen absoluten Zählerstand erfassen kann. Vorzugsweise ist mit jeder Zählwerksrolle eine Sensoranordnung gekoppelt, die die Drehposition der Zählwerksrolle erfaßt. Die jeder Zählwerksrolle zugeordnete Sensoranordnung besteht beispielsweise aus 5 binären optischen Sensoren (Lichtschranken), die mit einer mit der Zählwerksrolle gekoppelten oder in die Zählwerksrolle integrierten Codescheibe derart zusammenwirken, daß durch Verdrehen der Codescheibe die optischen Sensoren in einem vorgegebenen Muster ein- bzw. ausgeschaltet werden. Beispielsweise sind die optischen Sensoren in verschiedenen radialen Abständen an der Codescheibe angeordnet, wobei die Codescheibe den Sensoren zugeordnete strahlungsdurchlässige Fenster oder strahlungsreflektierende Oberflächenbereiche aufweist. Die Fenster bzw. reflektierenden Bereiche sind auf den jeweiligen Umfangslinien derart verteilt angeordnet, daß sich für eine vorgegebene Anzahl eine vorgegebene Anzahl im wesentlichen äquidistanter Drehpositionen der Codescheibe jeweils unterschiedliche Muster des Ein- bzw. Ausschaltens der zugeordneten optischen Sensoren ergeben. Im einfachsten Fall ist die Codescheibe in die zugehörige Zählwerksrolle integriert.

Die Ausgangssignale der Sensoren 6 werden der Auswerteschaltung 7 zugeführt. Die Auswerteschaltung 7 dient außerdem zur Strom/Spannungsversorgung der Sensoren 6. Die Auswerteschaltung 7 ist vorzugsweise eine programmgesteuerte aktive Auswerteschaltung, die einen Mikrocontroller, d. h. ein einen Mikroprozessor, Programm- und Datenspeicher und Ein/Ausgabeschnittstellen vereinigendes Bauelement, enthält. Die Auswerteschaltung enthält darüber hinaus eine Zeitgabeschaltung, die die zeitliche Wiederholung eines vorgegebenen Programmablaufs bestimmt. Die Auswerteschaltung fragt die einzelenen Sensoren periodisch ab, speichert die erfaßten Sensorausgangssignale, die den jeweiligen Zählerstand kodieren, zwischen, prüft die Funktionsbereitschaft der Erfassungsschaltung, verarbeitet die erfaßten Daten zu Ausgabedaten, die zusätzliche Informationen, wie Prüfdaten, Fehlerfassungsdaten, Zähleridentifikationsdaten, Zeitdaten und ähnliches umfassen können, und bereitet die Ausgabe dieser Daten über eine Ausgabeschnittstelle nach einem vorgegebenen Protokoll auf. Mit der Auswerteschaltung 7 ist eine Ausgabeschnittstelle 8 zur Ankoppelung des Zählwerks 2 an die Übertragungsleitung 3 gekoppelt. Die Ausgabeschnittstelle 8 sorgt für eine Ausgabe der Datencodes in Übereinstimmung mit gewünschten Signalpegeln. Die Ausgabe erfolgt vorzugsweise in serieller Form, wobei das Codesignal als binäres Signal mit zwei Pegelwerten unterschiedlicher logischer Bedeutung ausgegeben wird. Ein erster, hoher Pegelwert ist durch einen Stromwert zwischen 2,2 mA und 3,9 mA und ein zweiter, niedriger Pegelwert durch einen Stromwert unter 1,0 mA repräsentiert, vorzugsweise bei einer Versorgung mit 8,2 Volt bei einem Innenwiderstand von 1 kΩ. Die Übertragungsrate der kodierten Signale beträgt vorzugsweise 2400 Baud. Durch die mit der Ausgabeschnittstelle 8 zusammenwirkende Auswerteschaltung 7 werden beispielsweise die in der folgenden Tabelle dargestellten Datenblöcke erzeugt und auf die serielle Übertragungsleitung 3 ausgegeben.

**Tabelle 1: Inhalt der Codeblöcke**

| | |
|---|---|
| a<US> | Datenelement-Bezeichner **"Zählwerkstand"** |
| ZZZZZZZZ<US> | Zählwerkstand, max. 8-stellig |
| ww<US> | Wertigkeit des Zählwerkstandes als Zehnerpotenz mit Vorzeichen |
| eee<US> | Einheit des Zählwerkstandes |
| s<FS> | Status, genau ein Byte ASCII 30 bis 3F, 30 => kein Fehler |
| <BCC> | Blockprüf-Zeichen als gerade Längsparität über alle bisherigen Zeichen |
| <CR><LF> | Endekennung |
| | |
| b<US> | Datenelement-Bezeichner **"Typenschild"** |
| HHH<US> | Hersteller-Kennung |
| TTTTT<US> | Gerätetyp bzw. Zählergröße |
| SSSSSSSS <US> | Fabrikationsnummer |
| JJ<US> | Baujahr |
| VVVV<FS> | Software-Version, genau 4-stellig |
| <BCC> | Blockprüf-Zeichen als gerade Längsparität über alle bisherigen Zeichen |
| <CR><LF> | Endekennung |

Wie der Tabelle 1 zu entnehmen ist, erzeugt die Auswerteschaltung sowohl einen Codeblock, der den Zählerstand angibt, als auch einen Codeblock, der den jeweiligen Zähler identifiziert. Beide Codeblöcke werden periodisch auf die Übertragungsleitung 3 ausgegeben. Die Häufigkeit der Ausgabe kann jedoch unterschiedlich sein, beispielsweise kann der den Zähler identifizierende Codeblock wesentlich seltener als der den Zählerstand wiedergebende Codeblock übertragen werden. Der den Zählerstand wiedergebende Codeblock wird beispielsweise alle 10 Sekunden übertragen, d. h. bei einer Wiederholfrequenz von 0,1 Hz. Diese Wiederholfrequenz wird bei der Programmierung der Auswerteschaltung 7 vorgegeben.

Der programmgesteuert vorgegebene Ablauf bei der Erzeugung des Ausgabeprotokolls ist für ein Ausführungsbeispiel in der folgenden Tabelle dargestellt:

**Tabelle 2: Ablauf der Messung und Codesignal-Ausgabe**

| | | |
|---|---|---|
| Initialisierung | 60ms | Messung vorbereiten |
| Zählwerkstand lesen | 380ms | (9 * 24ms LL + 9 * 18ms Cal) |
| LED-Ströme messen | 50ms | (40 * 1ms) |
| Protokoll vorbereiten | 80ms | (EEPROM lesen; Protokoll konfigurieren) |
| Protokoll senden | 270ms | (2400 Baud) |

Wie bereits ausgeführt, wird der gesamte zeitliche Ablauf beispielsweise alle 10 Sekunden wiederholt. Die maximale Wiederholfrequenz ergibt sich aus der für den Ablauf benötigten Mindestzeit, die bei dem in Tabelle 2 dargestellten Ausführungsbeispiel 840 ms beträgt.

Zur Einrichtung bzw. Programmierung der Auswerteschaltung kann diese in einen Service-Modus versetzt werden. In diesem Service-Modus können neben der Wiederholfrequenz die das Ausgabeprotokoll bestimmenden Parameter und die den Zähler identifizierenden Daten eingegeben werden.

Es wird wieder auf Fig. 1 Bezug genommen. Das Zählwerk 2 enthält ferner zusätzlich einen mit der geringstwertigen Zahlenrolle des mechanischen Zählwerks 5 gekoppelten Dauermagneten und einen auf das bei Rotation der Zahlenrolle erzeugte veränderliche Magnetfeld ansprechenden Reed-Kontakt 9. Der Reed-Kontakt 9 erzeugt bei jeder Umdrehung der Zahlenrolle einen Impuls eines Ausgangssignals, das über eine von außen zugängliche Steckverbindung 10 abgreifbar ist. Da die zwischen dem Zählwerk 2 und dem Mengenumwerter 4 bestehende Verbindung 3 in der Regel nicht frei zugänglich ist, gestattet der zusätzliche Reed-Kontakt in Verbindung mit der frei zugänglichen Steckverbindung 10 den Anschluß eines einfachen Überwachungsgeräts für Eichzwecke sowie für eine Verbrauchserfassung am Ort des Gaszählers.

Die das Codesignal ausgebende Schnittstelle 8 des Zählwerks 2 ist über die Übertragungsleitung 3 mit einer im Mengenumwerter 4 vorhandenen Verarbeitungseinrichtung 11 gekoppelt. Die Verarbeitungseinrichtung 11 empfängt das den Zählerstand darstellende Codesignal zur Bestimmung des auf Normbedingungen bezogenen Volumens des Gasstroms. Dazu ist die Verarbeitungseinrichtung 11 außerdem über eine Übertragungsleitung 12 mit einem Drucksensor 13 gekoppelt. Der am Turbinenradgaszähler angebrachte Drucksensor 13 erfaßt den Bezugsdruck des Gaszählers. Außerdem ist die Verarbeitungseinrichtung 11 des Mengenumwerters 4 über eine Übertragungsleitung 14 mit einem Temperatursensor 15 gekoppelt, der die Temperatur des Gasstroms erfaßt. Mit Hilfe der so erfaßten Größen Druck und Temperatur und der in einem Zeitintervall erfaßten Differenz der Zählerstände kann die Verarbeitungseinrichtung einen Wert bestimmen, der einem auf Normbedingungen bezogenen Volumen des Gasstroms entspricht. Der so bestimmte Wert kann über eine Datenausgabeschnittstelle 16 und eine an diese angekoppelte Leitung 17 ausgegeben werden. Der elektronische Mengenumwerter 4 enthält außerdem eine Stromversorgungseinrichtung 18, die mit einer Stromversorgungsleitung 19 verbunden ist.

Der Mengenumwerter 4 ist so konfigurierbar, daß er wahlweise Werte für das auf Normbedingungen bezogene Volumen oder den augenblicklichen Zählerstand angebende Werte über die Datenausgabeschnittstelle 16 ausgeben kann. Das Konfigurieren des Mengenumwerters 4 erfolgt programmgesteuert, durch manuelle Einstellung oder durch ein von außen zugeführtes Steuersignal. Als Ausgabeschnittstelle 16 wird vorzugsweise eine Standardschnittstelle, beispielsweise eine DSfG-Schnittstelle verwendet. Die Übertragung eines den absoluten Zählerstand kodierenden Signals vom Zählwerk an den Mengenumwerter und die Ausgabe eines daraus erzeugten, den Zählerstand kodierenden Signals über die DSfG-Schnittstelle gestatten eine direkte Fernerfassung des Zählerstands. Dadurch kann das regelmäßig erforderliche Begehen "vor Ort", d. h. ein Ablesen des mechanischen Zählwerks am Gaszähler, entfallen bzw. dessen Häufigkeit reduziert werden, was zu einer erheblichen Kosteneinsparung führt.

Es sind eine Reihe von Maßnahmen vorgesehen, um die Übertragungssicherheit der Übertragung der elektronisch erfaßten Zählerstände an den Mengenumwerter zu erhöhen. Im Betrieb befindet sich die Auswerteschaltung des Zählwerks ausschließlich im Sendemodus, d. h., es werden keine Daten empfangen. Eine Änderung der in einem EEPROM abgelegten Konfigurationsdaten der Auswerteschaltung ist im Betrieb nicht möglich. Änderungen können nur im Service-Modus vorgenommen werden, welcher durch eine Hardware-Einstellung verriegelt ist. Diese Verriegelung ist nur bei Öffnen des Gehäuses des Zählwerks 2 zugänglich. Das Zählwerksgehäuse ist wiederum durch amtliche Plomben gesichert.

Die Auswerteschaltung 7 des Zählwerks 2 und die Auswerteschaltung 11 des Mengenumwerters 4 überwachen vorgegebene Schaltungsfunktionen und teilen Störungen durch vorgegebene Kodierungen der übertragenen und verarbeiteten Signale mit. Im Zählwerk 2 werden insbesondere folgende Störungen erfaßt: Unterbrechungen oder Kurzschluß der in den optischen Sensoren verwendeten Strahlungsemitter (z.B. Leuchtdioden) und Strahlungsempfänger (z. B. Fototransistoren), Störungen der Kommunikation zwischen den datenspeichernden und datenverarbeitenden Bauelementen der Auswerteschaltung (EEPROM, Prozessor) und Störungen der Funktion des mechanischen Zählwerks (z. B. zu schnelles Drehen des Zählwerks). Die Überwachung der Datenübertragung erfolgt darüber hinaus durch, Fehlererfassungs- und Fehlerkorrekturcodes (beispielsweise durch Blockprüfzeichen BCC als gerade Längsparität über alle Zeichen). Darüber hinaus sieht das Protokoll Maßnahmen gegen eine Fehlinterpretation von Daten vor. Schließlich kann in der Verarbeitungseinrichtung 11 ein Zwischenspeicher für vorhergehende Zählerstände vorgesehen sein, mit dessen Hilfe aufeinanderfolgende Zählerstände verglichen und somit die Plausibilität der erfaßten Werte, z.B. das monotone Ansteigen der Werte, kontrolliert werden kann.

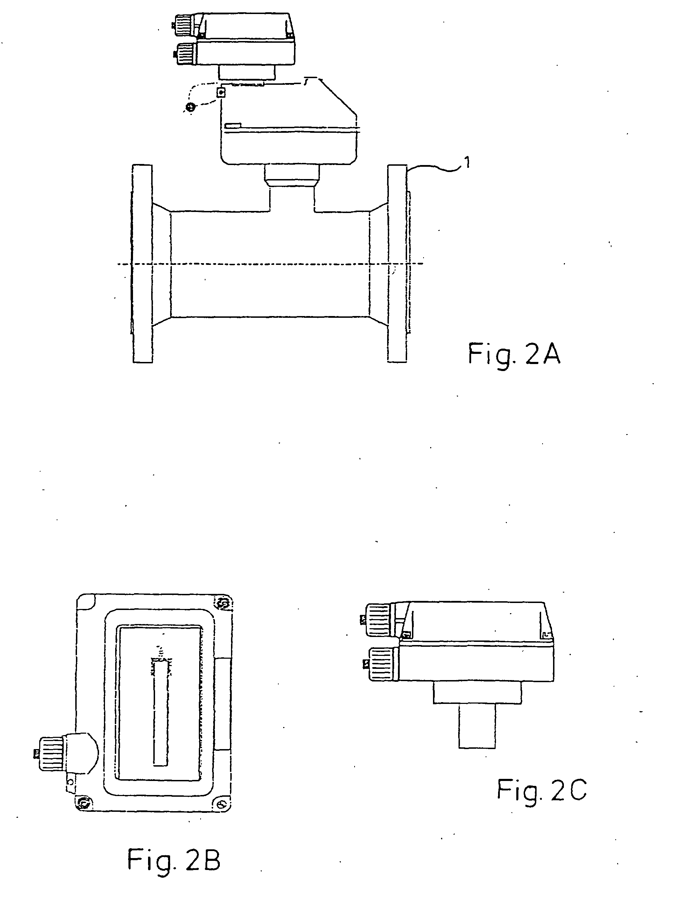

Fig. 2 zeigt eine Ausführungsform eines auf einem vorhandenen mechanischen Zählwerks eines herkömmlichen Turbinenradgaszählers aufsetzbaren Zusatzgeräts. Das Zusatzgerät wird auf eine vorhandene Ausgangswelle des Zählwerks aufgesetzt. Die Verbindung wird anschließend durch eine Plombe (Sicherungsstempel) gesichert (vgl. Fig. 2a). Die mechanische Übersetzung des aufgesetzten Zählwerks ist so gewählt, daß eine Umdrehung der mechanischen Abtriebswelle exakt eine Umdrehung der geringstwertigen Zählwerksrolle des Aufsatzes verursacht. Sofern der Aufsatz als Hauptzählwerk betrieben werden soll, wird das im Zähler ursprünglich vorhandene Zählwerk unkenntlich gemacht, beispielsweise durch Abdecken des Sichtfensters oder durch Entfernen der Zählwerksrollen.

## Patentansprüche

1. Anordnung zum Bestimmen eines auf Normbedingungen bezogenen Volumens eines Gasstroms mit einem in den Gasstrom eingebundenen Gaszähler (1), einer die Temperatur des Gasstroms erfassenden Temperatursensoreinrichtung (15), einer den Druck des Gases im Gasstrom erfassenden Drucksensoreinrichtung (13) und einem mit dem Gaszähler (1), der Temperatursensoreinrichtung (15) und der Drucksensoreinrichtung (13) gekoppelten elektronischen Mengenumwerter (4), wobei der Gaszähler (1) ein mechanisches Zählwerk (2) aufweistn **dadurch gekennzeichnet, dass** das mechanische Zählwerk (2) eine Zählersensoranordnung (6) aufweist, die ein elektrisches Messsignal erzeugt, dass der Mengenumwerter (4) ein das Messsignal verarbeitende Verarbeitungseinrichtung (11) aufweist, die ein Signal erzeugt,welches das auf Normbedingungen bezogene Volumen codiert,
dass die Zählersensoranordnung (6) den absoluten Zählerstand des mechanischen Zählwerks (2) erfasst, dass das mechanische Zählwerk eine Auswerteschaltung (7) aufweist, die das elektrische Messsignal der Zählersensoranordnung (6) verarbeitet und periodisch wiederholt ein den absoluten Zählerstand darstellendes Codesignal auf eine mit dem Mengenumwerter (4) gekoppelte Übertragungsleitung (3) ausgibt und dass die Auswerteschaltung (7) als Codesignal ein binäres Signal mit zwei Pegelwerten unterschiedlicher logischer Bedeutung erzeugt, wobei ein erster Pegelwert durch einen Stromwert zwischen 2,1mA und 3,9mA und ein zweiter Pegelwert durch einen Stromwert unter 1,2mA repräsentiert ist.

2. Anordnung nach Anspruch 1, **dadurch gekennzeichnet, das** der erste Pegelwert durch einen Stromwert von 2,2mA und der zweite Pegelwert durch einen Stromwert unter 1,0mA, repräsentiert ist.

3. Anordnung nach Anspruch 1 oder 2, **dadurch gekennzeichnet, dass** die Auswerteschaltung (7) neben dem den Zählerstand darstellenden Codesignal ein eine Maßeinheit codierendes digitales Signal und ein Fehlerprüfsignal erzeugt, wobei sie diese Signale enthaltende Codesignal-Blöcke periodisch wiederholt ausgibt.

4. Anordnung nach einem der Ansprüche 1 bis 3, **dadurch gekennzeichnet, dass** das mechanische Zählwerk (5) mit Zählersensoranordnung (6) und Auswerteschaltung (7) als Zusatzgerät (Fig. 2) ausgebildet ist, das auf einer Ausgangswelle des Gaszählers (1) aufsetzbar ist.

5. Anordnung nach einem der Ansprüche 1 bis 3, **dadurch gekennzeichnet,**
**dass** der Gaszähler ein Turbinenradgaszähler (1) ist, daß das mechanischen Zählwerk (5) über eine Magnetkupplung mit einem in einem Gasraum vom strömenden Gas angetriebenen Turbinenrad gekoppelt und in einem Gehäuse des Turbinenradgaszählers angeordnet ist, und
**dass** die Zählersensoranordnung (6) an das Zählwerk (5) angreifende berührungslose Sensoren aufweist.

6. Anordnung nach Anspruch 5, **dadurch gekennzeichnet, dass** die Zählersensoranordnung (6) jeweils N binäre optische Sensorelemente je Zahlenrolle des mechanischen Zählwerks (5) aufweist, die so angeordnet sind, daß sie jeweils 2 ^{N}-2 im wesentlichen äquidistante Positionen je Umdrehung der Zahlenrolle erfassen können, wobei N ≥ 4 ist.

7. Anordnung nach Anspruch 6, **dadurch gekennzeichnet, daß** N=5 optische Sensorelemente vorgesehen sind.

8. Anordnung nach einem der Ansprüche 1 bis 7, **dadurch gekennzeichnet, dass** das mechanische Zählwerk (5) zusätzlich einen das Voranschreiten des Zählwerks erfassenden Wegsensor (9) aufweist, der an eine am Zählwerk von außen zugängliche Schnittstelle (10) ein Ausgangssignal liefert, welches Impulse in einer zum vom Zählwerk erfassten Volumenstrom des Gases proportionalen Frequenz enthält.

9. Anordnung nach Anspruch 8, **dadurch gekennzeichnet, dass** der Wegsensor (9) wenigstens einen mit einer geringstwertigen Zahlenrolle des Zählwerks gekoppelten Dauermagneten und einen auf das so erzeugte veränderliche Magnetfeld ansprechenden Reed-Kontakt derart umfasst, dass bei jeder Umdrehung der geringstwertigen Zahlenrolle wenigstens ein Impuls des Ausgangssignals erzeugbar ist.

10. Anordnung nach einem der Ansprüche 1 bis 9, **dadurch gekennzeichnet, dass** mit der Verarbeitungseinrichtung (11) des Mengenumwerters (4) eine Datenausgabeschnittstelleneinrichtung (16) derart gekoppelt ist, dass diese wahlweise das das Volumen codierende Signal und/oder ein den Zählerstand darstellende Signal ausgeben kann.

11. Anordnung nach Anspruch 10, **dadurch gekennzeichnet, dass** das ausgegebene Signal in Abhängigkeit von einem Steuersignal auswählbar ist.

## Claims

1. Arrangement for determining a gas stream volume based on standard conditions, having a gas meter (1) which is incorporated in the gas stream, a temperature sensor device (15) which detects the temperature of the gas stream, a pressure sensor device (13) which detects the pressure of the gas in the gas stream, and an electronic volume converter (4) which is coupled to the gas meter (1), to the temperature sensor device (15) and to the pressure sensor device (13), the gas meter (1) having a mechanical counter (2), **characterized in that** the mechanical counter (2) has a meter sensor arrangement (6) which generates an electrical measurement signal, **in that** the volume converter (4) has a processing device (11) which processes the measurement signal and generates a signal which codes the volume based on standard conditions, **in that** the meter sensor arrangement (6) detects the absolute meter reading of the mechanical counter (2), **in that** the mechanical counter has an evaluation circuit (7) which processes the electrical measurement signal from the meter sensor arrangement (6) and outputs, in a periodically repeated manner, a code signal representing the absolute meter reading to a transmission line (3) coupled to the volume converter (4), and **in that** the evaluation circuit (7) generates, as a code signal, a binary signal having two level values of different logical significance, a first level value being represented by a current value of between 2.1 mA and 3.9 mA, and a second level value being represented by a current value of less than 1.2 mA.

2. Arrangement according to Claim 1, **characterized in that** the first level value is represented by a current value of 2.2 mA and the second level value is represented by a current value of less than 1.0 mA.

3. Arrangement according to Claim 1 or 2, **characterized in that**, in addition to the code signal representing the meter reading, the evaluation circuit (7) generates a digital signal, which codes a unit of measurement, and an error checking signal, the evaluation circuit outputting code signal blocks containing these signals in a periodically repeated manner.

4. Arrangement according to one of Claims 1 to 3, **characterized in that** the mechanical counter (5) with the meter sensor arrangement (6) and the evaluation circuit (7) is in the form of an additional device (Fig. 2) which can be placed on an output shaft of the gas meter (1).

5. Arrangement according to one of Claims 1 to 3, **characterized in that** the gas meter is a turbine wheel gas meter (1),
**in that** the mechanical counter (5) is coupled, via a magnetic coupling, to a turbine wheel driven by flowing gas in a gas space and is arranged in a housing of the turbine wheel gas meter, and
**in that** the meter sensor arrangement (6) has contactless sensors which act on the counter (5).

6. Arrangement according to Claim 5, **characterized in that** the meter sensor arrangement (6) respectively has N binary optical sensor elements for each number drum of the mechanical counter (5) which are arranged in such a manner that they can each detect 2^{N}-2 essentially equidistant positions for each revolution of the number drum, where N ≥ 4.

7. Arrangement according to Claim 6, **characterized in that** N=5 optical sensor elements are provided.

8. Arrangement according to one of Claims 1 to 7, **characterized in that** the mechanical counter (5) additionally has a displacement sensor (9) which detects the advance of the counter and provides an interface (10) which is accessible from the outside on the counter with an output signal containing pulses at a frequency which is proportional to the volumetric flow of gas detected by the counter.

9. Arrangement according to Claim 8, **characterized in that** the displacement sensor (9) comprises at least one permanent magnet, which is coupled to a least significant number drum of the counter, and a reed contact, which responds to the variable magnetic field generated in this manner, such that at least one pulse of the output signal can be generated for each revolution of the least significant number drum.

10. Arrangement according to one of Claims 1 to 9, **characterized in that** a data output interface device (16) is coupled to the processing device (11) of the volume converter (4) in such a manner that said device can selectively output the signal which codes the volume and/or a signal which represents the meter reading.

11. Arrangement according to Claim 10, **characterized in that** the signal which has been output can be selected on the basis of a control signal.

## Revendications

1. Arrangement pour déterminer un volume rapporté à des conditions normalisées d'un flux de gaz, comprenant un compteur de gaz (1) inclus dans le flux de gaz, un dispositif capteur de température (15) qui détecte la température du flux de gaz, un dispositif capteur de pression (13) qui détecte la pression du gaz dans le flux de gaz et un convertisseur de quantité (4) électronique connecté au compteur de gaz (1), au dispositif capteur de température (15) et au dispositif capteur de pression (13), le compteur de gaz (1) présentant un mécanisme de comptage mécanique (2), **caractérisé en ce que** le mécanisme de comptage mécanique (2) présente un arrangement capteur de compteur (6) qui génère un signal de mesure électrique, que le convertisseur de quantité (4) présente un dispositif de traitement (11) qui traite le signal de mesure, lequel génère un signal qui code le volume rapporté à des conditions normalisées, que l'arrangement capteur de compteur (6) détecte la valeur comptée absolue du mécanisme de comptage mécanique (2), que le mécanisme de comptage mécanique présente un circuit d'interprétation (7) qui traite le signal de mesure électrique de l'arrangement capteur de compteur (6) et délivre, avec une répétition périodique, un signal de codage qui représente la valeur comptée absolue sur une ligne de transmission (3) connectée au convertisseur de quantité (4) et que le circuit d'interprétation (7) génère comme signal de codage un signal binaire avec deux valeurs de niveau ayant des significations logiques différentes, une première valeur de niveau étant représentée par une valeur de courant entre 2,1 mA et 3,9 mA et une deuxième valeur de niveau par une valeur de courant inférieure à 1,2 mA.

2. Arrangement selon la revendication 1, **caractérisé en ce que** la première valeur de niveau est représentée par une valeur de courant de 2,2 mA et la deuxième valeur de niveau par une valeur de courant inférieure à 1,0 mA.

3. Arrangement selon la revendication 1 ou 2, **caractérisé en ce que** le circuit d'interprétation (7), outre le signal de codage qui représente la valeur comptée, génère un signal numérique qui code une unité de mesure et un signal de contrôle d'erreur, le circuit d'interprétation délivrant les blocs de signal de codage qui contiennent ces signaux avec une répétition périodique.

4. Arrangement selon l'une des revendications 1 à 3, **caractérisé en ce que** le mécanisme de comptage mécanique (5) avec l'arrangement capteur de compteur (6) et le circuit d'interprétation (7) est réalisé sous la forme d'un appareil supplémentaire (figure 2) qui peut être monté sur un arbre de sortie du compteur de gaz (1).

5. Arrangement selon l'une des revendications 1 à 3, **caractérisé en ce**
**que** le compteur de gaz est un compteur de gaz à roue de turbine (1),
**que** le mécanisme de comptage mécanique (5) est accouplé par le biais d'un accouplement magnétique avec une roue de turbine entraînée par le gaz qui s'écoule dans un espace à gaz et disposé dans un boîtier du compteur de gaz à roue de turbine, et
**que** l'arrangement capteur de compteur (6) présente des capteurs sans contact en prise sur le mécanisme de comptage (5).

6. Arrangement selon la revendication 5, **caractérisé en ce que** l'arrangement capteur de compteur (6) présente à chaque fois N éléments de détection optiques binaires par rouleau chiffré du mécanisme de comptage mécanique (5), lesquels sont disposés de telle sorte qu'ils puissent à chaque fois détecter 2^{N-2} positions essentiellement équidistantes par tour du rouleau chiffré, avec N ≥ 4.

7. Arrangement selon la revendication 6, **caractérisé en ce que** N = 5 éléments de détection optiques sont prévus.

8. Arrangement selon l'une des revendications 1 à 7, **caractérisé en ce que** le mécanisme de comptage mécanique (5) présente en plus un détecteur de course (9) qui détecte la progression du mécanisme de comptage et délivre un signal de sortie sur une interface (10) accessible depuis l'extérieur sur le mécanisme de comptage, lequel signal de sortie contient des impulsions dans une fréquence proportionnelle au débit volumique de gaz détecté par le mécanisme de comptage.

9. Arrangement selon la revendication 8, **caractérisé en ce que** le détecteur de course (9) comprend au moins un aimant permanent accouplé à un rouleau chiffré ayant la plus petite valeur du mécanisme de comptage et un contact Reed qui réagit au champ magnétique variable ainsi généré, de sorte qu'au moins une impulsion du signal de sortie puisse être générée à chaque tour du rouleau chiffré ayant la plus petite valeur.

10. Arrangement selon l'une des revendications 1 à 9, **caractérisé en ce qu'**un dispositif à interface de sortie de données (16) est accouplé avec le dispositif de traitement (11) du convertisseur de quantité (4) de telle sorte que celui-ci puisse délivrer, au choix, le signal qui code le volume et/ou un signal qui représente la valeur comptée.

11. Arrangement selon la revendication 10, **caractérisé en ce que** le signal délivré peut être sélectionné en fonction d'un signal de commande.
